# EUROPEAN PATENT SPECIFICATION

(11) **EP 4 391 182 B1**
(45) Date of publication and mention of the grant of the patent: **17.06.2026**
(21) Application number: 23737041.6
(22) Date of filing: 04.01.2023
(51) Int. Cl.: H01M 50/30, H01M 50/244, H01M 50/249, H01M 10/658, H01M 50/383

(54) **BATTERY MODULE, BATTERY, AND ELECTRIC DEVICE**
BATTERIEMODUL, BATTERIE UND ELEKTRISCHE VORRICHTUNG
MODULE DE BATTERIE, BATTERIE ET DISPOSITIF ÉLECTRIQUE

(30) Priority: 07.01.2022 CN 202220039932 U
(43) Date of publication of application: 26.06.2024
(73) Proprietor: Contemporary Amperex Technology (Hong Kong) Limited, Central, Central And Western District (HK)
(72) Inventor: WU, Shaoji, Ningde, Fujian 352100 (CN); CHEN, Shilong, Ningde, Fujian 352100 (CN); SHEN, Dan, Ningde, Fujian 352100 (CN); CHEN, Xiaobo, Ningde, Fujian 352100 (CN)
(74) Representative: Rowlands, Stuart Michael
(86) International application number: PCT/CN2023/070409
(87) International publication number: WO 2023/131178

(56) References cited:
- EP-A1- 3 641 013
- EP-A1- 3 817 086
- WO-A1-2020/166182
- WO-A1-2021/258794
- CN-A- 102 473 884
- CN-A- 113 036 265
- CN-U- 212 230 472
- CN-U- 216 720 195
- JP-A- 2016 062 757
- US-A1- 2013 252 058
- US-A1- 2019 296 293

## Description

### TECHNICAL FIELD

The present invention relates to the technical field of batteries, and specifically, to a battery module, a battery, and an electrical apparatus.

### BACKGROUND

In recent years, with the fast development of new energy vehicles, power batteries, as the power sources of electric vehicles, play an irreplaceable and important role in the field of electric vehicles. A battery consists of a box body and a plurality of battery modules accommodated within the box body, and the battery module is composed of a plurality of battery cells. Here, as the core components of new energy vehicles, batteries are required to have high safety. At present, the safety performance of battery modules has gradually become the focus of attention in the industry. However, in the prior art, when the battery cells are in thermal runaway, it is very easy for the battery module to cause the battery to catch fire, thus resulting in a great potential safety hazard in the use of the battery, which is not conducive to the safety of consumers during use.

EP817086A1 relates to a power supply device including: a plurality of secondary battery cells each having gas discharge valve for discharging internal gas; and cover part disposed on one surface of battery stack with the plurality of secondary battery cells stacked while covering gas discharge valve of each of the plurality of secondary battery cells. Cover part is provided inside with a gas guide path partitioned to discharge gas discharged from gas discharge valve to the outside of cover part, and the gas guide path includes one or more horizontal gas flow bending portions that bend at least a flow direction of some of the gas in plan view of cover part.

### SUMMARY OF THE INVENTION

Embodiments of the present invention provide a battery module as set out in claim 1, a battery as set out in claim 12, and an electrical apparatus as set out in claim 13, which can effectively reduce the potential safety hazard of the battery in use. Other aspects of the invention can be found in the dependent claims.

In a first aspect, embodiments of the present invention provide a battery module comprising a first guard and a plurality of battery cells; the plurality of battery cells are arranged along a first direction, one end of the battery cell in a second direction is provided with a pressure relief mechanism, the second direction is perpendicular to the first direction, and the pressure relief mechanism is configured to release the internal pressure of the battery cell when the internal pressure or temperature of the battery cell reaches a threshold value; the first guard comprises a first guarding portion, wherein the first guarding portion covers the end of the plurality of battery cells provided with the pressure relief mechanism, a plurality of venting ports are provided on the first guarding portion, and the venting port and the pressure relief mechanism are provided in a staggered way in the second direction.

In the above-mentioned technical solution, the end of the plurality of battery cells provided with the pressure relief mechanism in the second direction is covered with the first guarding portion of the first guard; the plurality of venting ports are provided on the first guarding portion, and the venting port and the pressure relief mechanism of the battery cell are provided in a staggered way in the second direction, so that in a battery with such battery modules, when the battery cell is in thermal runaway, the hot gas rushing out of the pressure relief mechanism can be preferentially blocked by the first guarding portion, and then released from the venting port, so that the phenomenon that the hot gas rushing out of the pressure relief mechanism directly impacts the box body of the battery when the battery cell is in thermal runaway can be reduced, and the box body of the battery can be protected to a certain extent, and the possibility of melting or spontaneous combustion of the box body of the battery when impacted by the hot gas can be effectively alleviated, which is in favor of reducing the use risk of the battery in later use.

In some embodiments, the plurality of venting ports comprise at least one row of venting ports, and each row of venting ports comprise a plurality of venting ports arranged at intervals along the first direction.

In the above-mentioned technical solution, the plurality of venting ports on the first guarding portion are provided in at least one row, and the venting ports in each row are arranged at intervals along the first direction, so that on the one hand, it is convenient to fabricate the venting ports on the first guarding portion, and it is in favor of reducing the fabrication difficulty, and on the other hand, the fabrication consistency among the first guards of the battery modules can be effectively ensured.

In some embodiments, the plurality of venting ports comprise one row of venting ports; and in the first direction, one venting port is provided between the pressure relief mechanisms of every two adjacent battery cells.

In the above-mentioned technical solution, one row of venting ports are provided on the first guarding portion, and each venting port is provided between the pressure relief mechanisms of two adjacent battery cells in the first direction, so that the venting port and the pressure relief mechanism are provided in a staggered way in the second direction, which is simple in structure and convenient to realize.

In some embodiments, the plurality of venting ports comprise two rows of venting ports; and the two rows of venting ports are respectively located on both sides of the pressure relief mechanism in a third direction perpendicular to the first direction and the second direction.

In the above-mentioned technical solution, two rows of venting ports are provided on a second guarding portion, and the two rows of venting ports are provided on both sides of the pressure relief mechanism in the third direction, that is to say, the pressure relief mechanism is located between the two rows of venting ports in the third direction, thus realizing the staggered provision of the venting port and the pressure relief mechanism in the second direction, which is simple in structure and convenient to realize.

The first guarding portion comprises multiple layers of mica paper arranged in a laminated manner, and the thickness of the first guarding portion is greater than or equal to 3 mm.

In the above-mentioned technical solution, on the one hand, the first guarding portion made of mica paper can have a good flame retardant effect, so as to reduce the melting phenomenon of the first guarding portion under the impact of the high temperature gas flow rushing out of the pressure relief mechanism when the battery cell is in thermal runaway, thus effectively alleviating the spontaneous combustion phenomenon of the battery module, and on the other hand, it can have a good insulation effect, so as to achieve the electrical insulation between the battery module and the other components, thus reducing the risk of short circuit of the battery module. In addition, by laminating the multiple layers of mica paper to form the first guarding portion, and the thickness of lamination is not less than 3 mm, the first guarding portion can have good impact resistance, thus alleviating the risk that the high temperature gas flow rushing out of the pressure relief mechanism breaks through or damages the first guarding portion, which is in favor of ensuring the normal use of the first guarding portion.

In some embodiments, the battery module has two opposite side plates in the third direction perpendicular to the first direction and the second direction; and the first guard further comprises two second guarding portions, which are respectively connected to both ends of the first guarding portion in the third direction, and respectively cover the outer side surfaces of the two side plates.

In the above-mentioned technical solution, by covering the outer side surfaces of the two side plates of the battery module with the second guarding portions, the battery module can be guarded well, so as to further isolate the battery cell, so that the creepage distance of the side plates of the battery module can be increased through the second guarding portion, and the impact of the external high temperature gas flow on the insulating components within the battery module can be effectively blocked, which is in favor of reducing the risk of insulation failure of the battery module, and in turn improving the safety during use of the battery module.

In some embodiments, the second guarding portion comprises a first reinforcing plate and a first guarding layer arranged in a laminated manner; and the first guarding layer is provided on the side of the first reinforcing plate facing away from the side plate.

In the above-mentioned technical solution, the second guarding portion is provided with the first reinforcing plate and the first guarding layer, and while the first guarding layer can guard the side plate, the hardness and impact resistance of the second guarding portion can be improved through the first reinforcing plate, thus facilitating the mounting of the second guarding portion, and being in favor of improving the stability of the second guarding portion covering the side plate. In addition, the second guarding portion with this structure does not need to increase the thickness of the first guarding layer, and the impact resistance of the first guarding portion can be ensured only through the first reinforcing plate, thus being in favor of reducing the manufacturing cost of the second guarding portion.

In some embodiments, the battery module has two opposite end plates in the first direction; the battery module further comprises two second guards provided corresponding to the end plates, the second guard comprises a third guarding portion, and at least part of the third guarding portion covers the outer side surface of the end plate.

In the above-mentioned technical solution, the battery module is further provided with the second guard, and by covering the outer side surface of the end plate of the battery module with the third guarding portion of the second guard, the battery module can be further guarded, so that the creepage distance of the end plate of the battery module can be increased through the third guarding portion, and the impact of the external high temperature gas flow on the insulating components within the battery module can be further blocked, which is in favor of reducing the risk of insulation failure of the battery module, and in turn reducing the potential safety hazard of the battery module in use.

In some embodiments, the third guarding portion comprises a second reinforcing plate and a second guarding layer arranged in a laminated manner; and the second guarding layer is provided on the side of the second reinforcing plate facing away from the end plate.

In the above-mentioned technical solution, the third guarding portion is provided with the second reinforcing plate and the second guarding layer arranged in a laminated manner, and while the second guarding layer can guard the end plate, the hardness and impact resistance of the third guarding portion can be improved through the second reinforcing plate, thus facilitating the mounting of the third guarding portion, and being in favor of improving the stability of the third guarding portion covering the end plate. In addition, the third guarding portion with this structure does not need to increase the thickness of the second guarding layer, and the impact resistance of the third guarding portion can be ensured only through the second reinforcing plate, thus being in favor of reducing the manufacturing cost of the third guarding portion.

In some embodiments, the end plate comprises a body portion and a mounting portion; the body portion has a mounting surface at the top in the second direction; a mounting portion is protrudingly provided on the mounting surface and is used for mounting an electrically conductive member electrically connected to the battery cell, and part of the third guarding portion covers the mounting surface.

In the above-mentioned technical solution, an electrically conductive member for electrical connection with the battery cell needs to be mounted on the end plate, so that there is a gap between both sides of the mounting portion of the end plate in the third direction and the body portion of the end plate, so that part of the third guarding portion covers the mounting surface of the body portion at a position corresponding to the gap, which is in favor of improving the guarding effect for the end plate.

In some embodiments, the battery module further has an insulating cover provided between the end plate and the plurality of battery cells in the first direction, and the insulating cover has a blank area that is not blocked by the end plate; and the second guard further comprises a fourth guarding portion, at least part of which covers the blank area of the insulating cover.

In the above-mentioned technical solution, by covering the blank area of the insulating cover with the fourth guarding portion, the portion of the insulating cover that is not blocked by the end plate can be guarded by the fourth guarding portion, so as to reduce the phenomenon that the insulating cover is damaged or melted when impacted by the external high temperature gas flow, so that on the one hand, the risk of spontaneous combustion of the insulating cover can be effectively reduced, and on the other hand, it is in favor of increasing the creepage distance of the insulating cover, so as to improve the insulating effect of the insulating cover and alleviate the phenomenon of insulation failure of the insulating cover, in order to reduce the risk of high voltage short circuit arcing between the battery cell and the end plate.

In some embodiments, the fourth guarding portion comprises a third reinforcing plate and a third guarding layer arranged in a laminated manner; and the third guarding layer is provided on the side of the third reinforcing plate facing away from the insulating cover.

In the above-mentioned technical solution, the fourth guarding portion is provided with the third reinforcing plate and the third guarding layer arranged in a laminated manner, and while the third guarding layer can guard the insulating cover, the hardness and impact resistance of the fourth guarding portion can be improved through the third reinforcing plate, thus facilitating the mounting of the fourth guarding portion, and being in favor of improving the stability of the fourth guarding portion covering the insulating cover. In addition, the fourth guarding portion with this structure does not need to increase the thickness of the third guarding layer, and the impact resistance of the fourth guarding portion can be ensured only through the third reinforcing plate, thus being in favor of reducing the manufacturing cost of the fourth guarding portion.

In a second aspect, embodiments of the present invention further provide a battery comprising a box body and the above-mentioned battery module, wherein the battery module is accommodated within the box body.

In a third aspect, embodiments of the present invention further provide an electrical apparatus comprising the above-mentioned battery which is used for providing electric energy.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural view of a vehicle provided by some embodiments of the present application;
Fig. 2 is an exploded structural view of a battery provided by some embodiments of the present application;
Fig. 3 is a schematic structural view of a battery module provided by some embodiments of the present application;
Fig. 4 is an exploded structural view of a battery module provided by some embodiments of the present application;
Fig. 5 is a schematic structural view of a battery module provided by some embodiments of the present application (with the first guard and the second guard removed);
Fig. 6 is a schematic structural view of a battery cell provided by some embodiments of the present application;
Fig. 7 is a schematic structural view of a first guard provided by some embodiments of the present application;
Fig. 8 is a schematic structural view of a first guard provided by some further embodiments of the present application;
Fig. 9 is a partial sectional view of a second guarding portion of a first guard provided by some embodiments of the present application;
Fig. 10 is a schematic view of the connection of a second guard to an end plate provided by some embodiments of the present application;
Fig. 11 is a partial sectional view of a third guarding portion of a second guard provided by some embodiments of the present application;
Fig. 12 is a schematic structural view of an end plate of a battery module provided by some embodiments of the present application;
Fig. 13 is an exploded structural view of a second guard provided by some embodiments of the present application;
Fig. 14 is a schematic structural view of a third guarding portion of a second guard provided by some embodiments of the present application;
Fig. 15 is a partial sectional view of a fourth guarding portion of a second guard provided by some embodiments of the present application.

Reference numerals: 1000-vehicle; 100-battery; 10-box body; 11-first box body; 12-second box body; 20-battery module; 21-first guard; 211-first guarding portion;2111-venting port; 212-second guarding portion; 2121-first reinforcing plate; 2122-first guarding layer; 2123-first adhesion layer; 22-battery cell; 221-pressure relief mechanism; 222-end cover; 23-side plate; 24-end plate; 241-body portion; 2411-mounting surface; 242-mounting portion; 25-blocking film; 26-insulating cover; 27-second guard; 271-third guarding portion; 2711-second reinforcing plate; 2712-second guarding layer; 2713-second adhesion layer; 2714-first portion; 2715-second portion; 2716-third portion; 2717-fourth portion; 272-fourth guarding portion; 2721-third reinforcing plate; 2722-third guarding layer; 2723-third adhesion layer; 200-controller; 300-motor; X-first direction; Y-second direction; Z-third direction.

### DETAILED DESCRIPTION

In order to make the objects, technical solutions, and advantages of the embodiments of the present application clearer, the technical solutions in the embodiments of the present application will be clearly described below in conjunction with the drawings in the embodiments of the present application. It will be apparent that the described embodiments are some of the embodiments of the present application, but not all of them. Based on the embodiments in the present application, all other embodiments obtained by those of ordinary skill in the art without creative effort fall within the protection scope of the present application.

Unless otherwise defined, all technical and scientific terms used in the present application have the same meaning as commonly understood by those skilled in the art to which the present application belongs. The terms used in the specification of the present application are for the purpose of describing specific embodiments only, and are not intended to limit the present application. The terms "comprise/include" and "have" and any variations thereof in the specification and claims of the present application as well as in the above description of drawings are intended to cover a non-exclusive inclusion. The terms "first", "second" and the like in the specification and claims of the present application or the above drawings are used to distinguish between different objects rather than to describe a particular order or primary-subordinate relationship.

Reference to "an embodiment" in the present application means that a particular feature, structure, or characteristic described in connection with an embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the dimensions such as the thickness, length and width of various components as well as the overall thickness, length and width of the integrated device shown in the drawings are only illustrative, and should not constitute any limitations on the present application.

"Multiple" in the present application refers to more than two (including two).

In the present application, the battery cell may comprise a lithium-ion secondary battery, a lithium-ion primary battery, a lithium-sulfur battery, a sodium-lithium-ion battery, a sodium-ion battery, a magnesium-ion battery, or the like, without limitation in the embodiments of the present application. The battery cell may be cylindrical, flat, rectangular, or in other shapes, which is not limited in the embodiments of the present application. Battery cells are generally divided into three types according to the packaging mode: cylindrical battery cells, square battery cells and pouch cells, which are not limited in the embodiments of the present application.

The battery mentioned in the embodiments of the present application refers to a single physical module comprising one or more battery cells to provide a higher voltage and capacity. For example, the battery mentioned in the present application may comprise a battery module, a battery pack, or the like. A battery generally comprises a box body for encapsulating one or more battery cells or a plurality of battery modules. The box body can prevent liquids or other foreign matters from affecting the charging or discharging of the battery cells.

The battery cell comprises a casing, an electrode assembly, and an electrolyte solution, wherein the casing is used for accommodating the electrode assembly and the electrolyte solution. The electrode assembly consists of a positive electrode sheet, a negative electrode sheet and a separator. The battery cell operates mainly relying on the movement of metal ions between the positive electrode sheet and the negative electrode sheet. The positive electrode sheet comprises a positive electrode current collector and a positive electrode active material layer, wherein the positive electrode active material layer is coated on a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet comprises a negative electrode current collector and a negative electrode active material layer, wherein the negative electrode active material layer is coated on a surface of the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The material of the negative electrode current collector may be copper, and the negative electrode active material may be carbon, silicon, or the like. In order to ensure that no fusing occurs when a large current passes, there are a plurality of positive electrode tabs which are laminated together, and there are a plurality of negative electrode tabs which are laminated together.

The separator may be made of PP (polypropylene), PE (polyethylene) or the like. In addition, the electrode assembly may be of a wound structure or a laminated structure, which is not limited in the embodiments of the present application.

In recent years, with the leap development of new energy vehicles, power batteries, as the power sources of electric vehicles, play an irreplaceable and important role in the field of electric vehicles. A battery consists of a box body and a plurality of battery modules accommodated within the box body, and the battery module is composed of a plurality of battery cells. Here, as the core components of new energy vehicles, batteries are required to have high safety, and thus the safety performance of the battery module determines the safety of the battery in use.

The inventors have found that during the use of the battery, the battery cell in the battery module will experience thermal runaway, which will cause thermal expansion of the battery cell, leading easily to the risk of battery explosion. Therefore, in the prior art, in order to solve the potential safety hazard of battery explosion, a pressure relief mechanism is generally provided on the battery cell, and when the battery cell is in thermal runaway, the high temperature gas flow inside the battery cell will break through the pressure relief mechanism of the battery cell, thereby releasing the internal pressure of the battery cell to reduce the risk of explosion due to the expansion of the battery cell. However, with the battery of this structure, when the battery cell is in thermal runaway, the high temperature gas flow inside the battery cell will directly impact the box body or other components of the battery after breaking through the pressure relief mechanism, thus causing the box body or other components of the battery to be damaged or melted, and in turn leading to the spontaneous combustion and firing of the battery, resulting in a great potential safety hazard of the battery in use, which is not in favor of the safety of consumers during use.

Based on the above-mentioned considerations, in order to solve the problem that there is a great potential safety hazard of the battery in later use, which is not in favor of the safety of consumers during use, the inventors have intensively studied and designed a battery module comprising a first guard and a plurality of battery cells, wherein the plurality of battery cells are arranged along a first direction, and each battery cell has a pressure relief mechanism at one end in a second direction, the first guard has a first guarding portion for covering one end of the plurality of battery cells in the second direction, a plurality of venting ports are provided on the first guarding portion, and each venting port and each pressure relief mechanism are provided in a staggered way in the second direction.

In a battery with such battery modules, the end of the plurality of battery cells provided with the pressure relief mechanism in the second direction is covered with the first guarding portion of the first guard, the plurality of venting ports are provided on the first guarding portion, and the venting port and the pressure relief mechanism of the battery cell are provided in a staggered way in the second direction, so that when the battery cell is in thermal runaway, the hot gas rushing out of the pressure relief mechanism can be preferentially blocked by the first guarding portion, and then released from the venting port, so that the phenomenon that the hot gas rushing out of the pressure relief mechanism directly impacts the box body of the battery when the battery cell is in thermal runaway can be reduced, and the box body of the battery can be protected to a certain extent, and the possibility of melting or spontaneous combustion of the box body of the battery when impacted by the hot gas can be effectively alleviated, which is in favor of reducing the use risk of the battery in later use.

The battery disclosed in the embodiments of the present application can be used, but not limited to, in electrical apparatus such as a vehicle, a ship, or an aircraft. The battery module, battery and the like disclosed in the present application can be used to form the power supply system of the electrical apparatus, which is in favor of alleviating the damage or melting of the box body or other components of the battery, so as to improve the safety during use of the battery.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. Here, the electric toy may include fixed or mobile electric toys, such as game consoles, electric car toys, electric ship toys, electric airplane toys, and the like. The spacecraft may include airplanes, rockets, space shuttles, spaceships, and the like.

In the following embodiments, for the convenience of description, a vehicle 1000 as an electrical apparatus according to an embodiment of the present application is taken as an example for description.

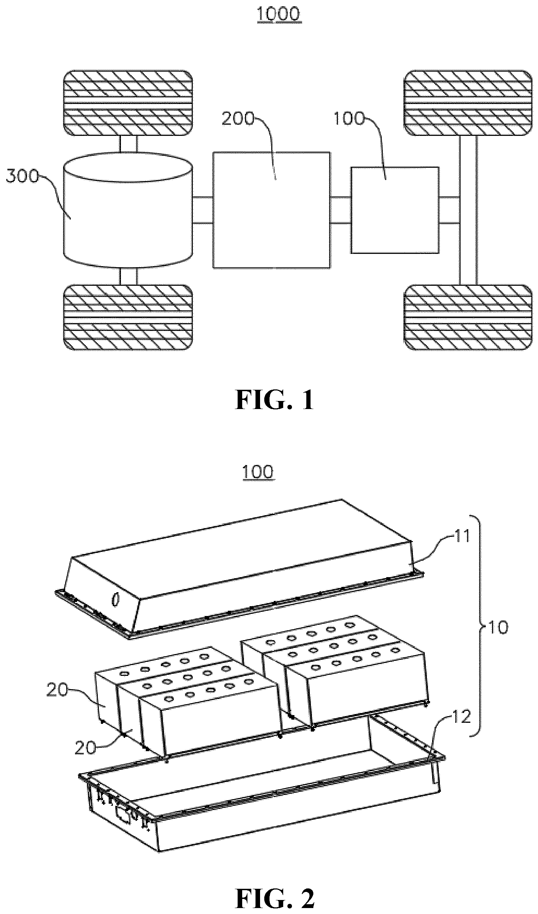

Referring to Fig. 1, which is a schematic structural view of a vehicle 1000 provided by some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The interior of the vehicle 1000 is provided with a battery 100, and the battery 100 may be provided at the bottom or head or tail of the vehicle 1000. The battery 100 may be used to power the vehicle 1000. For example, the battery 100 may be used as an operating power supply of the vehicle 1000. The vehicle 1000 may further comprise a controller 200 and a motor 300, and the controller 200 is used to control the battery 100 to power the motor 300, for example, for starting, navigating, and driving the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

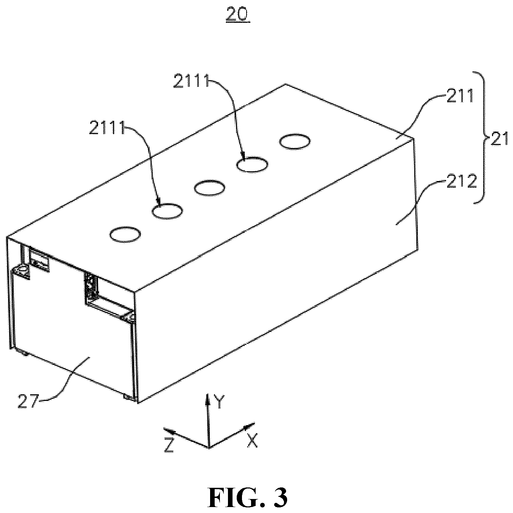

Referring to Fig. 2 and Fig. 3, Fig. 2 is an exploded structural view of the battery 100 provided by some embodiments of the present application, and Fig. 3 is a schematic structural view of a battery module 20 provided by some embodiments of the present application. The battery 100 comprises a box body 10 and the battery module 20, and the box body 10 has an assembly space for accommodating the battery module 20. Here, the box body 10 can be of a variety of structures. In some embodiments, the box body 10 may comprise a first box body 11 and a second box body 12 which are mutually covered, and together define the assembly space for accommodating the battery module 20. The second box body 12 can be of a hollow structure with one end open, the first box body 11 can be of a plate-like structure, and the first box body 11 covers the open side of the second box body 12, so that the first box body 11 and the second box body 12 together define the assembly space; and it is also possible that both the first box body 11 and the second box body 12 are of a hollow structure with one side open, and the open side of the first box body 11 covers the open side of the second box body 12. Of course, the box body 10 formed by the first box body 11 and the second box body 12 can be of various shapes, such as a cylinder or a cuboid.

In the battery 100, there may be one or a plurality of battery modules 20. Illustratively, in Fig. 2, the battery 100 comprises a plurality of battery modules 20, and the plurality of battery modules 20 may be connected in series or in parallel or in series-parallel connection, wherein series-parallel connection means that the plurality of battery modules 20 are connected in both series and parallel. The plurality of battery modules 20 may be directly connected in series or in parallel or in series-parallel connection, and then an entirety formed by the plurality of battery modules 20 is accommodated within the box body 10. The battery 100 further comprises a electrically conductive member (copper bar, aluminum bar, etc.) for realizing the electrical connection between the plurality of battery modules 20.

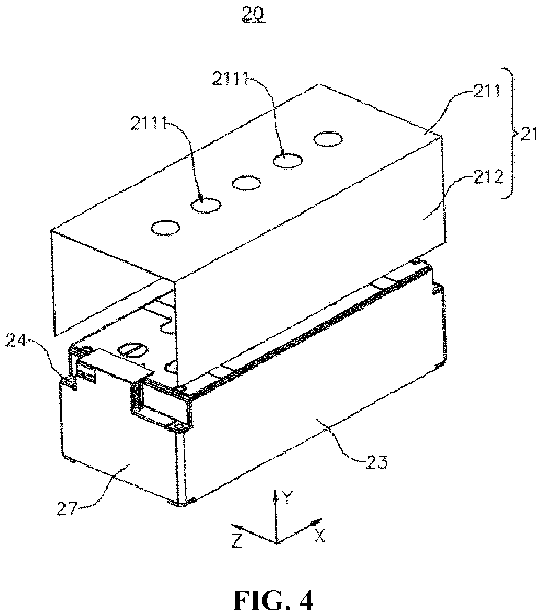

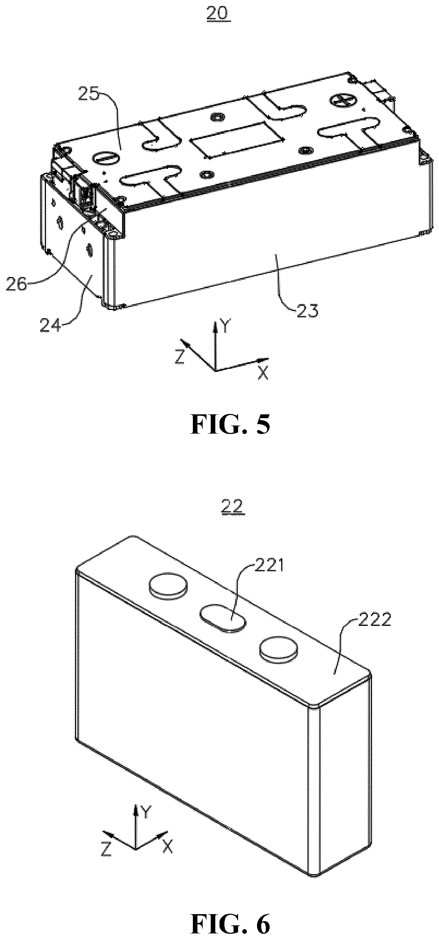

According to some embodiments of the present application, reference is made to Fig. 3, and further to Fig. 4 and Fig. 5; Fig. 4 is an exploded structural view of the battery module 20 provided by some embodiments of the present application, and Fig. 5 is a schematic structural view of the battery module 20 provided by some embodiments of the present application (with a first guard 21 and a second guard 27 removed). The present application provides a battery module 20 comprising a first guard 21 and a plurality of battery cells 22 (not shown in Fig. 5, and reference is made to Fig. 6, which is a schematic structural view of the battery cell 22 provided by some embodiments of the present application). The plurality of battery cells 22 are arranged along a first direction X, one end of the battery cell 22 in a second direction Y is provided with a pressure relief mechanism 221, wherein the second direction Y is perpendicular to the first direction X; and the pressure relief mechanism 221 is configured to release the internal pressure of the battery cell 22 when the internal pressure or temperature of the battery cell 22 reaches a threshold value. The first guard 21 comprises a first guarding portion 211 covering the end of the plurality of battery cells 22 provided with the pressure relief mechanism 221, a plurality of venting ports 2111 are provided on the first guarding portion 211, and the venting port 2111 and the pressure relief mechanism 221 are provided in a staggered way in the second direction Y.

Here, the venting port 2111 and the pressure relief mechanism 221 are provided in a staggered way in the second direction Y, that is, the projection of each venting port 2111 in the second direction Y is not coincident with the projection of each pressure relief mechanism 221 in the second direction Y (the two do not intersect), that is to say, in the second direction Y, each pressure relief mechanism 221 has no venting port 2111 provided opposite to it.

In some embodiments, the battery module 20 further comprises two side plates 23 and two end plates 24 (i.e., an enclosing frame in the prior art), wherein the two side plates 23 are spaced apart and oppositely arranged along a third direction Z (i.e., the width direction of the battery module 20), the two end plates 24 are spaced apart and oppositely arranged along the first direction X (i.e., the length direction of the battery module 20), and the two side plates 23 and the two end plates 24 are enclosed to form an accommodation space for accommodating the battery cells 22. Here, any two of the first direction X, the second direction Y and the third direction Z are perpendicular to each other.

In the battery module 20, the plurality of battery cells 22 may be connected in series or in parallel or in series-parallel connection. The battery module 20 may further comprise other structures. For example, the battery module 20 may further comprise a bus member for electrically connecting the plurality of battery cells 22.

In some embodiments, as shown in Fig. 5, the battery module 20 further comprises a blocking film 25 covering one end of the plurality of battery cells 22 in the second direction Y (i.e., the height direction of the battery module 20), and the blocking film 25 is used to prevent dust from entering between the plurality of battery cells 22. The blocking film 25 may be made of various materials, such as polyethylene, polypropylene, or polyvinyl chloride.

In some embodiments, as shown in Fig. 5, the battery module 20 further comprises an insulating cover 26, which is provided between the end plate 24 and the plurality of battery cells 22 in the first direction X, and the insulating cover 26 is used for insulating and isolating the end plate 24 and the battery cell 22. The insulating cover 26 may be made of various materials, such as polyethylene, polypropylene, or polyvinyl chloride.

Referring to Fig. 6, one end of the battery cell 22 in the second direction Y is provided with a pressure relief mechanism 221, the battery cell 22 has an end cover 222 at one end in the second direction Y, the pressure relief mechanism 221 is provided on the end cover 222, and is used to release the pressure inside the battery cell 22 when the internal pressure or temperature of the battery cell 22 reaches a predetermined value. The pressure relief mechanism 221 may be components such as an explosion-proof valve, an explosion-proof disc, an air valve, a pressure relief valve, a safety valve, or the like.

Optionally, each battery cell 22 may be a secondary battery 100 or a primary battery 100; and it may also be a lithium-sulfur battery 100, a sodium-ion battery 100 or a magnesium-ion battery 100, but is not limited thereto. The battery cell 22 may be in the shape of a cylinder, a flat body, a cuboid, or others.

In the battery module 20 with this structure, the end of the plurality of battery cells 22 provided with the pressure relief mechanism 221 in the second direction Y is covered with the first guarding portion 211 of the first guard 21, the plurality of venting ports 2111 are provided on the first guarding portion 211, and the venting port 2111 and the pressure relief mechanism 221of the battery cell 22 are provided in a staggered way in the second direction Y, so that in the battery 100 with such a battery module 20, when the battery cell 22 is in thermal runaway, the hot gas rushing out of the pressure relief mechanism 221 can be preferentially blocked by the first guarding portion 211, and then released from the venting port 2111, so that the phenomenon that the hot gas rushing out of the pressure relief mechanism 221 directly impacts the box body 10 of the battery 100 when the battery cell 22 is in thermal runaway can be reduced, and the box body 10 of the battery 100 can be protected to a certain extent, and the possibility of melting or spontaneous combustion of the box body 10 of the battery 100 when impacted by the hot gas can be effectively alleviated, which is in favor of reducing the use risk of the battery 100 in later use.

According to some embodiments of the present application, referring to Fig. 3 and Fig. 4, the plurality of venting ports 2111 comprise at least one row of venting ports 2111, and each row of venting ports 2111 comprise a plurality of venting ports 2111 arranged at intervals along the first direction X.

In the above description, the plurality of venting ports 2111 can be provided in one row or in multiple rows, and can be provided according to actual requirements.

The plurality of venting ports 2111 on the first guarding portion 211 are provided in at least one row, and the venting ports 2111 in each row are arranged at intervals along the first direction X, so that on the one hand, it is convenient to fabricate the venting ports 2111 on the first guarding portion 211, and it is in favor of reducing the fabrication difficulty, and on the other hand, the fabrication consistency among the first guards 21 of the battery modules 20 can be effectively ensured.

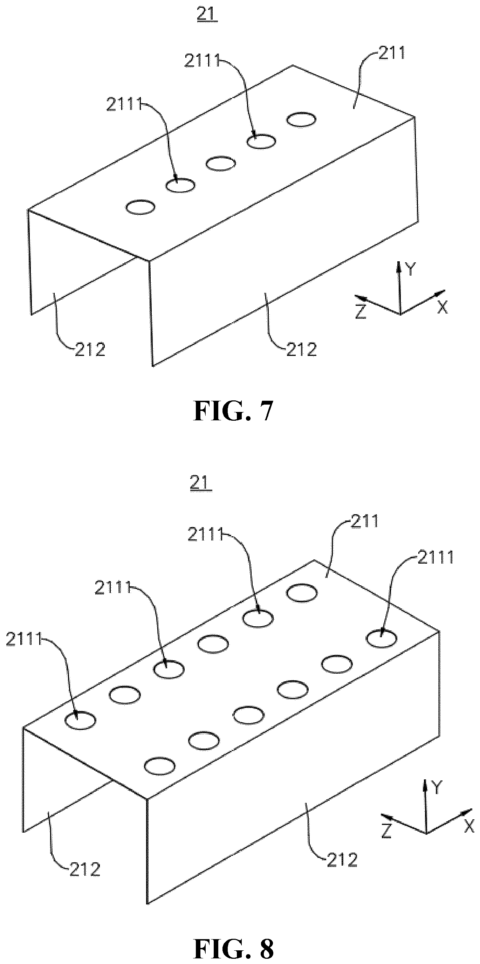

Illustratively, reference is made to Fig. 7, which is a schematic structural view of a first guard 21 provided by some embodiments of the present application. The plurality of venting ports 2111 comprise one row of venting ports 2111; and in the first direction X, one venting port 2111 is provided between the pressure relief mechanisms 221 of every two adjacent battery cells 22.

One row of venting ports 2111 are provided on the first guarding portion 211, and each venting port 2111 is provided between the pressure relief mechanisms 221 of two adjacent battery cells 22 in the first direction X, so that the venting port 2111 and the pressure relief mechanism 221 are provided in a staggered way in the second direction Y, which is simple in structure and convenient to realize.

In some embodiments, reference is made to Fig. 8, which is a schematic structural view of a first guard 21 provided by some further embodiments of the present application. The plurality of venting ports 2111 comprise two rows of venting ports 2111; and the two rows of venting ports 2111 are respectively located on both sides of the pressure relief mechanism 221 in the third direction Z perpendicular to the first direction X and the second direction Y. Of course, the structure of the first guard 21 is not limited thereto, and the venting ports 2111 provided on the first guarding portion 211 can be in three, four or five rows.

Here, two rows of venting ports 2111 are provided on a second guarding portion 212, and the two rows of venting ports 2111 are provided on both sides of the pressure relief mechanism 221 in the third direction Z, that is to say, in the third direction Z, the pressure relief mechanism 221 is located between the two rows of venting ports 2111.

In the first guarding portion 211 with this structure, the venting port 2111 and the pressure relief mechanism 221 are provided in a staggered way in the second direction Y, which is simple in structure and convenient to realize.

The first guarding portion 211 comprises multiple layers of mica paper arranged in a laminated manner, and the thickness of the first guarding portion 211 is greater than or equal to 3 mm.

On the one hand, the first guarding portion 211 made of mica paper can have a good flame retardant effect, so as to reduce the melting phenomenon of the first guarding portion 211 under the impact of the high temperature gas flow rushing out of the pressure relief mechanism 221 when the battery cell 22 is in thermal runaway, thus effectively alleviating the spontaneous combustion phenomenon of the battery module 20, and on the other hand, it can have a good insulation effect, so as to achieve the electrical insulation between the battery module 20 and the other components, thus reducing the risk of short circuit of the battery module 20. In addition, by laminating the multiple layers of mica paper to form the first guarding portion 211, and the thickness of lamination is not less than 3 mm, the first guarding portion 211 can have good impact resistance, thus alleviating the risk that the high temperature gas flow rushing out of the pressure relief mechanism 221 breaks through or damages the first guarding portion 211, which is in favor of ensuring the normal use of the first guarding portion 211.

According to some embodiments of the present application, with continued reference to Fig. 4 and Fig. 5, the battery module 20 has two opposite side plates 23 in the third direction Z perpendicular to the first direction X and the second direction Y. The first guard 21 further comprises two second guarding portions 212, which are respectively connected to both ends of the first guarding portion 211 in the third direction Z, and respectively cover the outer side surfaces of the two side plates 23.

Illustratively, the second guarding portion 212 is adhered to the outer side surface of the side plate 23.

By covering the outer side surfaces of the two side plates 23 of the battery module 20 with the second guarding portions 212, the battery module 20 can be guarded well, so as to further isolate the battery cell 22, so that the creepage distance of the side plates 23 of the battery module 20 can be increased through the second guarding portion 212, and the impact of the external high temperature gas flow on the insulating components within the battery module 20 can be effectively blocked, which is in favor of reducing the risk of insulation failure of the battery module 20, and in turn improving the safety during use of the battery module 20.

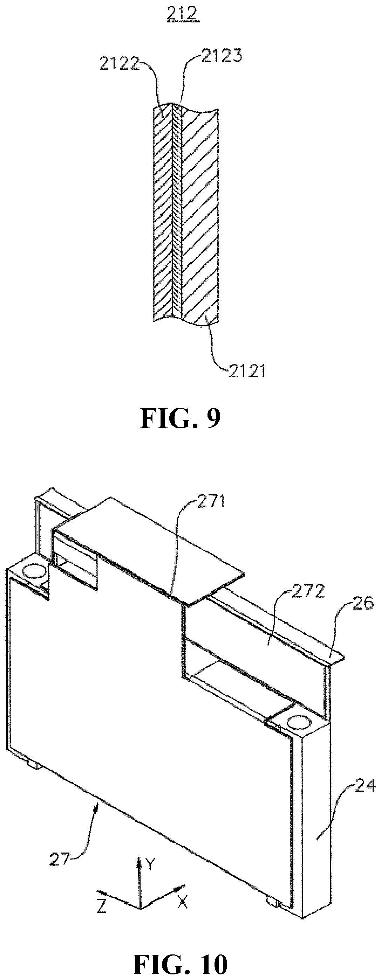

According to some embodiments of the present application, reference is made to Fig. 9, which is a partial sectional view of a second guarding portion 212 of a first guard 21 provided by some embodiments of the present application. The second guarding portion 212 comprises a first reinforcing plate 2121 and a first guarding layer 2122 arranged in a laminated manner, and the first guarding layer 2122 is provided on the side of the first reinforcing plate 2121 facing away from the side plate 23.

Here, the first guarding layer 2122 is provided on the side of the first reinforcing plate 2121 facing away from the side plate 23, that is, the first reinforcing plate 2121 is located between the side plate 23 and the first guarding layer 2122 in the third direction Z.

Illustratively, the first guarding layer 2122 may be made of mica paper or refractory ceramic silicone rubber.

Illustratively, the first reinforcing plate 2121 may be made of polyethylene, polypropylene, polyvinyl chloride, or polystyrene.

Furthermore, the second guarding portion 212 further comprises a first adhesion layer 2123, which is located between the first reinforcing plate 2121 and the first guarding layer 2122 in the thickness direction of the second guarding portion 212, so as to adhere the first guarding layer 2122 to the first reinforcing plate 2121.

Illustratively, in Fig. 9, the first adhesion layer 2123 is a double-sided adhesive, and in other embodiments, the first adhesion layer 2123 may also be an adhesive glue or the like.

The second guarding portion 212 is provided with the first reinforcing plate 2121 and the first guarding layer 2122, and while the first guarding layer 2122 can guard the side plate 23, the hardness and impact resistance of the second guarding portion 212 can be improved through the first reinforcing plate 2121, thus facilitating the mounting of the second guarding portion 212, and being in favor of improving the stability of the second guarding portion 212 covering the side plate 23. In addition, the second guarding portion 212 with this structure does not need to increase the thickness of the first guarding layer 2122, and the impact resistance of the first guarding portion 211 can be ensured only through the first reinforcing plate 2121, thus being in favor of reducing the manufacturing cost of the second guarding portion 212.

According to some embodiments of the present application, reference is made to Fig. 4, and further to Fig. 10, which is a schematic view of the connection of a second guard 27 to an end plate 24 provided by some embodiments of the present application. The battery module 20 has two opposite end plates 24 in the first direction X. The battery module 20 further comprises two second guards 27 provided corresponding to the end plates 24, the second guard 27 comprises a third guarding portion 271, and at least part of the third guarding portion 271 covers the outer side surface of the end plate 24.

In the above description, at least part of the third guarding portion 271 covers the outer side surface of the end plate 24, that is, the outer surface of the end plate 24 in the first direction X is covered with the third guarding portion 271.

Illustratively, the third guarding portion 271 is adhered to the outer side surface of the end plate 24.

By covering the outer side surface of the end plate 24 of the battery module 20 with the third guarding portion 271 of the second guard 27, the battery module 20 can be further guarded, so that the creepage distance of the end plate 24 of the battery module 20 can be increased through the third guarding portion 271, and the impact of the external high temperature gas flow on the insulating components within the battery module 20 can be further blocked, which is in favor of reducing the risk of insulation failure of the battery module 20, and in turn reducing the potential safety hazard of the battery module 20 in use.

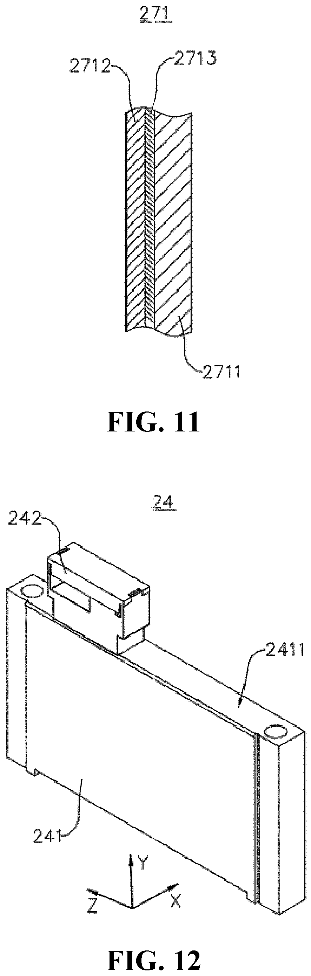

According to some embodiments of the present application, reference is made to Fig. 11, which is a partial sectional view of a third guarding portion 271 of a second guard 27 provided by some embodiments of the present application. The third guarding portion 271 comprises a second reinforcing plate 2711 and a second guarding layer 2712 arranged in a laminated manner, and the second guarding layer 2712 is provided on the side of the second reinforcing plate 2711 facing away from the end plate 24.

Here, the second guarding layer 2712 is provided on the side of the second reinforcing plate 2711 facing away from the end plate 24, that is, the second reinforcing plate 2711 is located between the end plate 24 and the second guarding layer 2712 in the first direction X.

Illustratively, the second guarding layer 2712 may be made of mica paper or refractory ceramic silicone rubber.

Illustratively, the second reinforcing plate 2711 may be made of polyethylene, polypropylene, polyvinyl chloride, or polystyrene.

Furthermore, the second guarding portion 212 further comprises a second adhesion layer 2713, which is located between the second reinforcing plate 2711 and the second guarding layer 2712 in the thickness direction of the third guarding portion 271, so as to adhere the second guarding layer 2712 to the second reinforcing plate 2711.

Illustratively, in Fig. 11, the second adhesion layer 2713 is a double-sided adhesive, and in other embodiments, the second adhesion layer 2713 may also be an adhesive glue or the like.

It should be noted that each part of the third guarding portion 271 is composed of the above-mentioned structures, that is, each part of the third guarding portion 271 is formed by sequentially laminating the second reinforcing plate 2711, the second adhesion layer 2713 and the second guarding layer 2712.

The third guarding portion 271 is provided with the second reinforcing plate 2711 and the second guarding layer 2712 arranged in a laminated manner, and while the second guarding layer 2712 can guard the end plate 24, the hardness and impact resistance of the third guarding portion 271 can be improved through the second reinforcing plate 2711, thus facilitating the mounting of the third guarding portion 271, and being in favor of improving the stability of the third guarding portion 271 covering the end plate 24. In addition, the third guarding portion 271 with this structure does not need to increase the thickness of the second guarding layer 2712, and the impact resistance of the third guarding portion 271 can be ensured only through the second reinforcing plate 2711, thus being in favor of reducing the manufacturing cost of the third guarding portion 271.

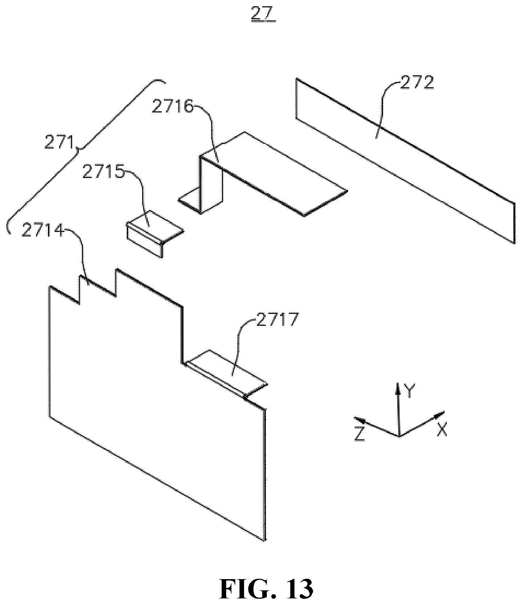

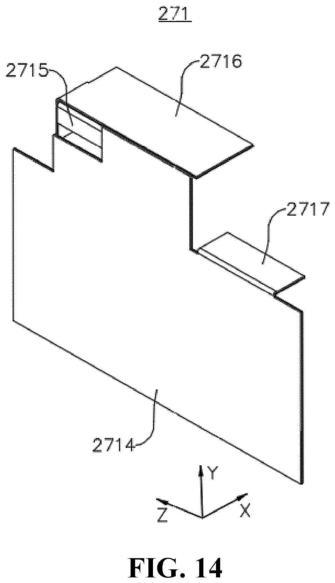

According to some embodiments of the present application, reference is made to Fig. 10, and further to Fig. 12, Fig. 13 and Fig. 14; Fig. 12 is a schematic structural view of an end plate 24 of a battery module 20 provided by some embodiments of the present application, Fig. 13 is an exploded structural view of a second guard 27 provided by some embodiments of the present application, and Fig. 14 is a schematic structural view of a third guarding portion 271 of a second guard 27 provided by some embodiments of the present application. The end plate 24 comprises a body portion 241 and a mounting portion 242, and the body portion 241 has a mounting surface 2411 at the top in the second direction Y. The mounting portion 242 is protrudingly provided on the mounting surface 2411, and is used for mounting an electrically conductive member electrically connected to the battery cell 22, and part of the third guarding portion 271 covers the mounting surface 2411.

Here, an electrically conductive member for electrical connection with the battery cell 22 needs to be mounted on the end plate 24, so that there is a gap between both sides of the mounting portion 242 of the end plate 24 in the third direction Z and the body portion 241 of the end plate 24. Therefore, the third guarding portion 271 comprises a first portion 2714, a second portion 2715, a third portion 2716 and a fourth portion 2717. The first portion 2714 has a flat plate structure, and covers the side of the body portion 241 and the mounting portion 242 facing away from the battery cell 22 in the first direction X. The second portion 2715 has an L-shaped structure, with one part of the second portion 2715 covers the top of the mounting portion 242 in the second direction Y, and another part covers the side of the mounting portion 242 facing away from the battery cell 22 in the first direction X, so that the second portion 2715 and the first portion 2714 together define a passage for the electrically conductive member to pass through. The third portion 2716 has a Z-shaped structure, part of the third portion 2716 covers the top of the mounting portion 242 in the second direction Y, part of it covers one side of the mounting portion 242 in the third direction Z, and part of it covers the mounting surface 2411 located on the side of the mounting portion 242 in the third direction Z. The fourth portion 2717 has a flat plate structure, and covers the mounting surface 2411 on the other side of the mounting portion 242 in the third direction Z, and the fourth portion 2717 is connected to and perpendicular to the first portion 2714.

Optionally, the third guarding portion 271 may have a split type structure or an integral structure. Illustratively, in Fig. 13, the third guarding portion 271 has a split type structure.

It should be noted that the structure of the third guarding portion 271 is not limited thereto. The third guarding portion 271 serves to guard the end plate 24, and can be designed according to the structure and shape of the end plate 24, that is to say, the structure of the third guarding portion 271 can be designed according to the shape and structure of the end plate 24 in the actual production process.

The third guarding portion 271 with this structure can fully guard the end plate 24 according to its actual structure, so as to realize the conformal design of the third guarding portion 271 and the end plate 24, which is in favor of improving the guarding effect for the end plate 24.

According to some embodiments of the present application, referring to Fig. 10 and Fig. 13, the battery module 20 further has an insulating cover 26, which is provided between the end plate 24 and the plurality of battery cells 22 in the first direction X, and the insulating cover 26 has a blank area not blocked by the end plate 24. The second guard 27 further comprises a fourth guarding portion 272, at least part of which covers the blank area of the insulating cover 26.

Here, at least part of the fourth guarding portion 272 covers the blank area of the insulating cover 26, that is, as the mounting portion 242 is protrudingly provided on the body portion 241 of the end plate 24, there is a part of the insulating cover 26 that is not blocked by the body portion 241 and the mounting portion 242 of the end plate 24 in the first direction X, so that the exposed portion of the insulating cover 26 is covered with the fourth guarding portion 272 to protect the insulating cover 26.

By covering the blank area of the insulating cover 26 with the fourth guarding portion 272, the portion of the insulating cover 26 that is not blocked by the end plate 24 can be guarded by the fourth guarding portion 272, so as to reduce the phenomenon that the insulating cover 26 is damaged or melted when impacted by the external high temperature gas flow, so that on the one hand, the risk of spontaneous combustion of the insulating cover 26 can be effectively reduced, and on the other hand, it is in favor of increasing the creepage distance of the insulating cover 26, so as to improve the insulating effect of the insulating cover 26 and alleviate the phenomenon of insulation failure of the insulating cover 26, in order to reduce the risk of high voltage short circuit arcing between the battery cell 22 and the end plate 24.

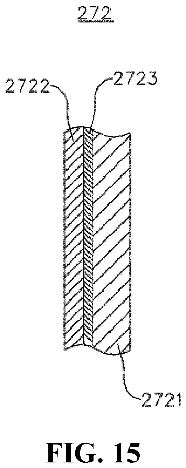

According to some embodiments of the present application, reference is made to Fig. 15, which is a partial sectional view of a fourth guarding portion 272 of a second guard 27 provided by some embodiments of the present application. The fourth guarding portion 272 comprises a third reinforcing plate 2721 and a third guarding layer 2722 arranged in a laminated manner, and the third guarding layer 2722 is provided on the side of the third reinforcing plate 2721 facing away from the insulating cover 26.

Here, the third guarding layer 2722 is provided on the side of the third reinforcing plate 2721 facing away from the insulating cover 26, that is, the third reinforcing plate 2721 is located between the insulating cover 26 and the third guarding layer 2722 in the first direction X.

Illustratively, the third guarding layer 2722 may be made of mica paper or refractory ceramic silicone rubber.

Illustratively, the third reinforcing plate 2721 may be made of polyethylene, polypropylene, polyvinyl chloride, or polystyrene.

Furthermore, the fourth guarding portion 272 further comprises a third adhesion layer 2723, which is located between the third reinforcing plate 2721 and the third guarding layer 2722 in the thickness direction of the fourth guarding portion 272, so as to adhere the third guarding layer 2722 to the third reinforcing plate 2721.

Illustratively, in Fig. 11, the third adhesion layer 2723 is a double-sided adhesive, and in other embodiments, the third adhesion layer 2723 may also be an adhesive glue or the like.

The fourth guarding portion 272 is provided with the third reinforcing plate 2721 and the third guarding layer 2722 arranged in a laminated manner, and while the third guarding layer 2722 can guard the insulating cover 26, the hardness and impact resistance of the fourth guarding portion 272 can be improved through the third reinforcing plate 2721, thus facilitating the mounting of the fourth guarding portion 272, and being in favor of improving the stability of the fourth guarding portion 272 covering the insulating cover 26. In addition, the fourth guarding portion 272 with this structure does not need to increase the thickness of the third guarding layer 2722, and the impact resistance of the fourth guarding portion 272 can be ensured only through the third reinforcing plate 2721, thus being in favor of reducing the manufacturing cost of the fourth guarding portion 272.

According to some embodiments of the present application, the present application further provides a battery 100 comprising a box body 10 and a battery module 20 according to any one of the above solutions, wherein the battery module 20 is accommodated within the box body 10.

According to some embodiments of the present application, the present application further provides an electrical apparatus comprising a battery 100 of any one of the above solutions, wherein the battery 100 is used to provide electric energy for the electrical apparatus.

The electrical apparatus may be any one of the aforementioned devices or systems using the battery 100.

According to some embodiments of the present application, referring to Fig. 3-Fig. 7 and Fig. 9-Fig. 15, the present application provides a battery module 20 comprising a first guard 21, a second guard 27 and a plurality of battery cells 22, wherein the plurality of battery cells 22 are arranged along a first direction X, and one end of the battery cell 22 in a second direction Y is provided with a pressure relief mechanism 221. The first guard 21 comprises a first guarding portion 211 and two second guarding portions 212, wherein the first guarding portion 211 covers the end of the plurality of battery cells 22 provided with the pressure relief mechanism 221, the first guarding portion 211 is provided with a plurality of venting ports 2111 arranged at intervals along the first direction X, and one venting port 2111 is provided between the pressure relief mechanisms 221 of every two adjacent battery cells 22, so that the venting port 2111 and the pressure relief mechanism 221 are provided in a staggered way in the second direction Y. The two second guarding portions 212 are respectively connected to both ends of the first guarding portion 211 in a third direction Z, and any two of the first direction X, the second direction Y and the third direction Z are perpendicular to each other. The second guarding portion 212 covers the outer side surface of a side plate 23. The second guard 27 comprises a third guarding portion 271 and a fourth guarding portion 272, the third guarding portion 271 covers the outer side surface of an end plate 24, and the fourth guarding portion 272 covers the area of an insulating cover 26 that is not blocked by the end plate 24. Here, the first guarding portion 211 is formed by laminating multiple layers of mica paper, and the thickness is not less than 3 mm. The second guarding portion 212, the third guarding portion 271 and the fourth guarding portion 272 are all formed by laminating a plastic board and a mica paper bonded by a double-sided adhesive, and the mica paper is located outside the plastic board.

It should be noted that in case of no conflicts, the embodiments in the present invention and the features in the embodiments can be combined with each other.

The above are only preferred embodiments of the present application, and are not intended to limit the present invention that is defined by the appended claims.

## Claims

1. A battery module (20), comprising:
a plurality of battery cells (22), wherein the plurality of battery cells (22) are arranged along a first direction (X), one end of the battery cell (22) in a second direction (Y) is provided with a pressure relief mechanism (221), the second direction (Y) is perpendicular to the first direction (X), and the pressure relief mechanism (221) is configured to release the internal pressure of the battery cell (22) when the internal pressure or temperature of the battery cell (22) reaches a threshold value; and
a first guard (21), wherein the first guard (21) comprises a first guarding portion (211), the first guarding portion (211) covers the end of the plurality of battery cells (22) provided with the pressure relief mechanism (221), a plurality of venting ports (2111) are provided on the first guarding portion (211), and the venting port (2111) and the pressure relief mechanism (221) are provided in a staggered way in the second direction (Y), such that the projection of each venting port (2111) in the second direction (Y) does not intersect with the projection of each pressure relief mechanism (221) in the second direction (Y);
**characterized in that** the first guarding portion (211) comprises multiple layers of mica paper arranged in a laminated manner, and the thickness of the first guarding portion (211) is greater than or equal to 3 mm.

2. The battery module (20) according to claim 1, wherein the plurality of venting ports (2111) comprise at least one row of venting ports (2111), and each row of venting ports (2111) comprise a plurality of the venting ports (2111) arranged at intervals along the first direction (X).

3. The battery module (20) according to claim 2, wherein the plurality of venting ports (2111) comprise one row of venting ports (2111); and
in the first direction (X), one of the venting ports (2111) is provided between the pressure relief mechanisms (221) of every two adjacent ones of the battery cells (22).

4. The battery module (20) according to claim 2, wherein the plurality of venting ports (2111) comprise two rows of venting ports (2111);
the two rows of venting ports (2111) are respectively located on both sides of the pressure relief mechanism (221) in a third direction (Z), and the third direction (Z) is perpendicular to the first direction (X) and the second direction (Y).

5. The battery module (20) according to any one of claims 1-4, wherein the battery module (20) has two opposite side plates (23) in the third direction (Z) perpendicular to the first direction (X) and the second direction (Y);
the first guard (21) further comprises two second guarding portions (212), and in the third direction (Z), two of the second guarding portions (212) are respectively connected to both ends of the first guarding portion (211), and the two second guarding portions (212) respectively cover the outer side surfaces of the two side plates (23).

6. The battery module (20) according to claim 5, wherein the second guarding portion (212) comprises a first reinforcing plate (2121) and a first guarding layer (2122) arranged in a laminated manner;
wherein the first guarding layer (2122) is provided on the side of the first reinforcing plate (2121) facing away from the side plate (23).

7. The battery module (20) according to any one of claims 1-6, wherein the battery module (20) has two opposite end plates (24) in the first direction (X);
the battery module (20) further comprises two second guards (27), wherein the second guard (27) is provided corresponding to the end plate (24), the second guard (27) comprises a third guarding portion (271), and at least part of the third guarding portion (271) covers the outer side surface of the end plate (24).

8. The battery module (20) according to claim 7, wherein the third guarding portion (271) comprises a second reinforcing plate (2711) and a second guarding layer (2712) arranged in a laminated manner;
wherein the second guarding layer (2712) is provided on the side of the second reinforcing plate (2711) facing away from the end plate (24).

9. The battery module (20) according to claim 7 or 8, wherein the end plate (24) comprises a body portion (241) and a mounting portion (242);
the body portion (241) has a mounting surface at the top in the second direction (Y);
the mounting portion (242) is protrudingly provided on the mounting surface, and is used for mounting an electrically conductive member electrically connected to the battery cell (22), and part of the third guarding portion (271) covers the mounting surface.

10. The battery module (20) according to claim 9, wherein the battery module (20) further has an insulating cover (26), and in the first direction (X), the insulating cover (26) is provided between the end plate (24) and the plurality of battery cells (22), and the insulating cover (26) has a blank area not blocked by the end plate (24); and
the second guard (27) further comprises a fourth guarding portion (272), and at least part of the fourth guarding portion (272) covers the blank area of the insulating cover (26).

11. The battery module (20) according to claim 10, wherein the fourth guarding portion (272) comprises a third reinforcing plate (2721) and a third guarding layer (2722) arranged in a laminated manner;
wherein the third guarding layer (2722) is provided on the side of the third reinforcing plate (2721) facing away from the insulating cover (26).

12. A battery (100), comprising:
a box body (10); and
the battery module (20) according to any one of claims 1-11, wherein the battery module (20) is accommodated within the box body (10).

13. An electrical apparatus, comprising the battery (100) according to claim 12, wherein the battery (100) is used for providing electric energy.

## Patentansprüche

1. Batteriemodul (20), umfassend:
eine Vielzahl von Batteriezellen (22), wobei die Vielzahl von Batteriezellen (22) entlang einer ersten Richtung (X) angeordnet ist, ein Ende der Batteriezelle (22) in einer zweiten Richtung (Y) mit einem Druckentlastungsmechanismus (221) versehen ist, die zweite Richtung (Y) senkrecht zur ersten Richtung (X) verläuft und der Druckentlastungsmechanismus (221) konfiguriert ist, um den Innendruck der Batteriezelle (22) abzulassen, wenn der Innendruck oder die Innentemperatur der Batteriezelle (22) einen Schwellenwert erreicht; und
einen ersten Schutz (21), wobei der erste Schutz (21) einen ersten Schutzabschnitt (211) umfasst, der erste Schutzabschnitt (211) das Ende der Vielzahl der Batteriezellen (22) abdeckt, das mit dem Druckentlastungsmechanismus (221) versehen ist, eine Vielzahl von Entlüftungsöffnungen (2111) an dem ersten Schutzabschnitt (211) bereitgestellt ist, und die Entlüftungsöffnungen (2111) und der Druckentlastungsmechanismus (221) in der zweiten Richtung (Y) versetzt bereitgestellt sind, so dass die Projektion jeder Entlüftungsöffnung (2111) in der zweiten Richtung (Y) die Projektion jedes Druckentlastungsmechanismus (221) in der zweiten Richtung (Y) nicht schneidet;
**dadurch gekennzeichnet, dass** der erste Schutzabschnitt (211) mehrere Schichten aus Glimmerpapier umfasst, die laminiert angeordnet sind, und die Dicke des ersten Schutzabschnitts (211) größer oder gleich 3 mm ist.

2. Batteriemodul (20) nach Anspruch 1, wobei die Vielzahl von Entlüftungsöffnungen (2111) mindestens eine Reihe von Entlüftungsöffnungen (2111) umfasst und jede Reihe von Entlüftungsöffnungen (2111) eine Vielzahl der Entlüftungsöffnungen (2111) umfasst, die in Abständen entlang der ersten Richtung (X) angeordnet sind.

3. Batteriemodul (20) nach Anspruch 2, wobei die Vielzahl von Entlüftungsöffnungen (2111) eine Reihe von Entlüftungsöffnungen (2111) umfasst; und
in der ersten Richtung (X) eine der Entlüftungsöffnungen (2111) zwischen den Druckentlastungsmechanismen (221)jeweils zweier angrenzender Batteriezellen (22) bereitgestellt ist.

4. Batteriemodul (20) nach Anspruch 2, wobei die Vielzahl von Entlüftungsöffnungen (2111) zwei Reihen von Entlüftungsöffnungen (2111) umfasst;
die zwei Reihen von Entlüftungsöffnungen (2111) jeweils auf beiden Seiten des Druckentlastungsmechanismus (221) in einer dritten Richtung (Z) angeordnet sind, und die dritte Richtung (Z) senkrecht zur ersten Richtung (X) und zur zweiten Richtung (Y) verläuft.

5. Batteriemodul (20) nach einem der Ansprüche 1-4, wobei das Batteriemodul (20) zwei gegenüberliegende Seitenplatten (23) in der dritten Richtung (Z) senkrecht zur ersten Richtung (X) und zur zweiten Richtung (Y) aufweist;
der erste Schutz (21) ferner zwei zweite Schutzabschnitte (212) umfasst, und in der dritten Richtung (Z) zwei der zweiten Schutzabschnitte (212) jeweils mit beiden Enden des ersten Schutzabschnitts (211) verbunden sind, und die beiden zweiten Schutzabschnitte (212) jeweils die äußeren Seitenoberflächen der beiden Seitenplatten (23) abdecken.

6. Batteriemodul (20) nach Anspruch 5, wobei der zweite Schutzabschnitt (212) eine erste Verstärkungsplatte (2121) und eine erste Schutzschicht (2122) umfasst, die laminiert angeordnet sind;
wobei die erste Schutzschicht (2122) auf der von der Seitenplatte (23) abgewandten Seite der ersten Verstärkungsplatte (2121) bereitgestellt ist.

7. Batteriemodul (20) nach einem der Ansprüche 1-6, wobei das Batteriemodul (20) zwei gegenüberliegende Endplatten (24) in der ersten Richtung (X) aufweist;
das Batteriemodul (20) ferner zwei zweite Schutze (27) umfasst, wobei der zweite Schutz (27) entsprechend der Endplatte (24) bereitgestellt ist, der zweite Schutz (27) einen dritten Schutzabschnitt (271) umfasst und mindestens ein Teil des dritten Schutzabschnitts (271) die äußere Seitenoberfläche der Endplatte (24) abdeckt.

8. Batteriemodul (20) nach Anspruch 7, wobei der dritte Schutzabschnitt (271) eine zweite Verstärkungsplatte (2711) und eine zweite Schutzschicht (2712) umfasst, die laminiert angeordnet sind;
wobei die zweite Schutzschicht (2712) auf der von der Endplatte (24) abgewandten Seite der zweiten Verstärkungsplatte (2711) bereitgestellt ist.

9. Batteriemodul (20) nach Anspruch 7 oder 8, wobei die Endplatte (24) einen Körperabschnitt (241) und einen Montageabschnitt (242) umfasst;
der Körperabschnitt (241) an der Oberseite in der zweiten Richtung (Y) eine Montageoberfläche aufweist;
der Montageabschnitt (242) vorstehend an der Montageoberfläche bereitgestellt ist und zum Montieren eines elektrisch leitenden Elements verwendet wird, das elektrisch mit der Batteriezelle (22) verbunden ist,
und ein Teil des dritten Schutzabschnitts (271) die Montageoberfläche abdeckt.

10. Batteriemodul (20) nach Anspruch 9, wobei das Batteriemodul (20) ferner eine Isolierabdeckung (26) aufweist und in der ersten Richtung (X) die Isolierabdeckung (26) zwischen der Endplatte (24) und der Vielzahl von Batteriezellen (22) bereitgestellt ist, und die Isolierabdeckung (26) einen freien Bereich aufweist, der nicht von der Endplatte (24) blockiert wird; und
der zweite Schutz (27) ferner einen vierten Schutzabschnitt (272) umfasst, und mindestens ein Teil des vierten Schutzabschnitts (272) den freien Bereich der Isolierabdeckung (26) abdeckt.

11. Batteriemodul (20) nach Anspruch 10, wobei der vierte Schutzabschnitt (272) eine dritte Verstärkungsplatte (2721) und eine dritte Schutzschicht (2722) umfasst, die laminiert angeordnet sind;
wobei die dritte Schutzschicht (2722) auf der von der Isolierabdeckung (26) abgewandten Seite der dritten Verstärkungsplatte (2721) bereitgestellt ist.

12. Batterie (100), umfassend:
einen Kastenkörper (10); und
das Batteriemodul (20) nach einem der Ansprüche 1-11, wobei das Batteriemodul (20) innerhalb des Kastenkörpers (10) aufgenommen ist.

13. Elektrische Einrichtung, umfassend die Batterie (100) nach Anspruch 12, wobei die Batterie (100) zum Bereitstellen elektrischer Energie verwendet wird.

## Revendications

1. Module de batterie (20), comprenant :
une pluralité de cellules de batterie (22), la pluralité de cellules de batterie (22) étant agencées le long d'une première direction (X), une extrémité de la cellule de batterie (22) dans une deuxième direction (Y) étant pourvue d'un mécanisme de libération de pression (221), la deuxième direction (Y) étant perpendiculaire à la première direction (X), et le mécanisme de libération de pression (221) étant conçu pour libérer la pression interne de la cellule de batterie (22) quand la pression ou la température internes de la cellule de batterie (22) atteint une valeur seuil ; et
une première protection (21), la première protection (21) comprenant une première partie de protection (211), la première partie de protection (211) couvrant l'extrémité de la pluralité de cellules de batterie (22) pourvues du mécanisme de libération de pression (221), une pluralité d'orifices d'évent (2111) sont ménagés sur la première partie de protection (211), et l'orifice d'évent (2111) et le mécanisme de libération de pression (221) sont disposés de manière décalée dans la deuxième direction (Y), de telle sorte que la projection de chaque orifice d'évent (2111) dans la deuxième direction (Y) ne coupe pas la projection de chaque mécanisme de libération de pression (221) dans la deuxième direction (Y) ;
**caractérisé en ce que** la première partie de protection (211) comprend plusieurs couches de papier de mica agencées de manière stratifiée, et l'épaisseur de la première partie de protection (211) est supérieure ou égale à 3 mm.

2. Module de batterie (20) selon la revendication 1, dans lequel la pluralité d'orifices d'évent (2111) comprend au moins une rangée d'orifices d'évent (2111), et chaque rangée d'orifices d'évent (2111) comprend une pluralité d'orifices d'évent (2111) agencés à intervalles le long de la première direction (X).

3. Module de batterie (20) selon la revendication 2, dans lequel la pluralité d'orifices d'évent (2111) comprend une rangée d'orifices d'évent (2111) ; et
dans la première direction (X), un des orifices d'évent (2111) est disposé entre les mécanismes de libération de pression (221) de chaque paire de cellules de batterie (22) adjacentes.

4. Module de batterie (20) selon la revendication 2, dans lequel la pluralité d'orifices d'évent (2111) comprend deux rangées d'orifices d'évent (2111) ;
les deux rangées d'orifices d'évent (2111) sont respectivement situées de part et d'autre du mécanisme de libération de pression (221) dans une troisième direction (Z), et la troisième direction (Z) est perpendiculaire à la première direction (X) et à la deuxième direction (Y).

5. Module de batterie (20) selon l'une quelconque des revendications 1 à 4, dans lequel le module de batterie (20) comporte deux plaques latérales opposées (23) dans la troisième direction (Z) perpendiculaire à la première direction (X) et la deuxième direction (Y) ;
la première protection (21) comprend en outre deux deuxièmes parties de protection (212), et dans la troisième direction (Z), deux des deuxièmes parties de protection (212) sont respectivement raccordées aux deux extrémités de la première partie de protection (211), et les deux deuxièmes parties de protection (212) couvrent respectivement les surfaces latérales externes des deux plaques latérales (23).

6. Module de batterie (20) selon la revendication 5, dans lequel la deuxième partie de protection (212) comprend une première plaque de renfort (2121) et une première couche de protection (2122) agencées de manière stratifiée ;
dans lequel la première couche de protection (2122) est disposée sur le côté de la première plaque de renfort (2121) qui est orienté à l'opposé de la plaque latérale (23).

7. Module de batterie (20) selon l'une quelconque des revendications 1 à 6, dans lequel le module de batterie (20) comporte deux plaques d'extrémité opposées (24) dans la première direction (X) ;
le module de batterie (20) comprend en outre deux deuxièmes protections (27), la deuxième protection (27) étant fournie en correspondance avec la plaque d'extrémité (24), la deuxième protection (27) comprend une troisième partie de protection (271), et au moins une partie de la troisième partie de protection (271) couvre la surface latérale externe de la plaque d'extrémité (24).

8. Module de batterie (20) selon la revendication 7, dans lequel la troisième partie de protection (271) comprend une deuxième plaque de renfort (2711) et une deuxième couche de protection (2712) agencées de manière stratifiée ;
dans lequel la deuxième couche de protection (2712) est disposée sur le côté de la deuxième plaque de renfort (2711) qui est orienté à l'opposé de la plaque d'extrémité (24).

9. Module de batterie (20) selon la revendication 7 ou 8, dans lequel la plaque d'extrémité (24) comprend une partie corps (241) et une partie de montage (242) ;
la partie corps (241) a une surface de montage au niveau du haut dans la deuxième direction (Y) ;
la partie de montage (242) est fournie saillante sur la surface de montage, et est utilisée pour le montage d'un élément électriquement conducteur électriquement connecté à la cellule de batterie (22), et une partie de la troisième partie de protection (271) couvre la surface de montage.

10. Module de batterie (20) selon la revendication 9, le module de batterie (20) comportant en outre un couvercle isolant (26), et dans la première direction (X), le couvercle isolant (26) est disposé entre la plaque d'extrémité (24) et la pluralité de cellules de batterie (22), et le couvercle isolant (26) a une zone vierge non bloquée par la plaque d'extrémité (24) ; et
la deuxième protection (27) comprend en outre une quatrième partie de protection (272), et au moins une partie de la quatrième partie de protection (272) couvre la zone vierge du couvercle isolant (26).

11. Module de batterie (20) selon la revendication 10, dans lequel la quatrième partie de protection (272) comprend une troisième plaque de renfort (2721) et une troisième couche de protection (2722) agencées de manière stratifiée ;
dans lequel la troisième couche de protection (2722) est disposée sur le côté de la troisième plaque de renfort (2721) qui est orienté à l'opposé du couvercle isolant (26).

12. Batterie (100), comprenant :
un corps de boîte (10) ; et
le module de batterie (20) selon l'une quelconque des revendications 1 à 11, dans laquelle le module de batterie (20) est reçu à l'intérieur du corps de boîte (10).

13. Appareil électrique, comprenant la batterie (100) selon la revendication 12, la batterie (100) étant utilisée pour fournir de l'énergie électrique.
